# EUROPÄISCHE PATENTSCHRIFT

(11) **EP 3 376 106 B1**
(45) Veröffentlichungstag und Bekanntmachung des Hinweises auf die Patenterteilung: **21.04.2021**
(21) Anmeldenummer: 18000238.8
(22) Anmeldetag: 09.03.2018
(51) Int. Cl.: F23J 15/06, F23L 3/00, F23L 11/02, F23L 17/16

(54) **FEUERUNGSANLAGE**
COMBUSTION PLANT
INSTALLATION DE COMBUSTION

(30) Priorität: 14.03.2017 DE 202017001336 U
(43) Veröffentlichungstag der Anmeldung: 19.09.2018
(73) Patentinhaber: Spartherm Feuerungstechnik GmbH, 49324 Melle (DE)
(72) Erfinder: Schmatloch, V., 49324 Melle (DE); Nollek, Martin, 32584 Löhne (DE)
(74) Vertreter: Pott, Ulrich

(56) Entgegenhaltungen:
- EP-A1- 1 030 110
- CH-A1- 701 784
- DE-A1- 3 743 205
- DE-B3-102007 060 656
- FR-A1- 2 675 886

## Beschreibung

Die Erfindung betrifft eine Feuerungsanlage, insbesondere einen Kamin-, oder Kachelofen, Kamineinsatz oder dgl. Vorrichtung zur Verbrennung fester Brennstoffe wie Scheitholz, Holzpresslingen wie Brickets oder Pellets oder mineralischer Brennstoffe wie Kohle oder Anthrazit mit einem verschließbaren Feuerraum und einem Verbrennungsluftanschluss mit einer Verbrennungsluftzufuhr und mit einer an einen Schornstein anschließbaren Abgasführung, wobei die Verbrennungsluftzufuhr eine eine Schornsteinzugriegelvorrichtung ausbildende Bypassleitung aufweist, die die Verbrennungsluftzufuhr unter Umgehung des Feuerraumes mit der Abgasführung verbindet.

Mit Biomasse, d. h. vorwiegend mit Holz, betriebene Feuerungsanlagen leisten den größten Beitrag zur Nutzung regenerativer Energien. Aus diesem Grunde und auch wegen der damit erreichbaren Verbesserung der Wärmeversorgungssicherheit in Privathaushalten erfreuen sich diese Feuerungsanlagen zunehmender Beliebtheit. Diese Feuerungsanlagen sind insbesondere für Einzelfeuerstätten vorgesehen, bei denen die Verbrennung ohne Gebläseunterstützung abläuft und die Verbrennungszuluftzfuhr oder die Abgasleitung mit Hilfe des natürlichen Schornsteinzuges bewerkstelligt wird. Solche Feuerstätten können in vorteilhafter Weise ohne elektrische Hilfsenergie betrieben werden, sind dafür aber auf den Naturzug des Schornsteins angewiesen, der durch eine entsprechende Auslegung der Schornsteinanlage sichergestellt werden kann.

Insbesondere chargenweise beschickte Feuerungsanlagen geben die Wärme üblicherweise nicht gleichmäßig über eine längere Zeit ab, sondern erzeugen nach einer Anbrennphase mit eher schwacher Wärmeabgabe während einer begrenzten Zeitspanne eine hohe Wärmemenge. Dieser Phase folgt dann eine Ausbrandphase, während der die Wärmeabgabe allmählich ausklingt. Entsprechend der Wärmeerzeugung kann auch die Abgastemperatur, d. h. die Temperatur der Gassäule im Schornstein variieren. Derartige Temperaturänderungen haben wiederum zeitliche Veränderungen der Gasdichte im Schornstein zur Folge und damit entsprechende Auswirkungen auf den Schornsteinzug, der von Dichteunterschieden angetrieben wird. Der Schornsteinzug kann zudem von Witterungsbedingungen abhängen und insbesondere bei heftigeren Winden starken Variationen unterliegen.

Zur Steuerung der Verbrennungsluftzufuhr weisen Feuerstätten herkömmlicher Bauart vielfach Einstellvorrichtungen auf, mit denen Querschnitte in Luftzuführungen verkleinert werden können. Moderne Einzelfeuerstätten haben meist eine gestufte Luftzufuhr, wobei ein Teil der Zuluft als Primärluft direkt in das Glutbett eingedüst wird und ein anderer Teil als Sekundärluft oberhalb des Glutbettes mit den Verbrennungsgasen vermischt wird, um durch eine vollständige Nachverbrennung eine optimierte Verbrennungsgüte zu erreichen und damit die Schadstoffemissionen zu minimieren. Die Einstellungen dazu können üblicherweise von Hand vorgenommen werden und sind dann während des Abbrandes zur jeweiligen Abbrandphase passend einzustellen.

Nachteilig hierbei ist, dass bei der Zuluftsteuerung die Zugverhältnisse im Schornstein nicht hinreichend zu berücksichtigen sind.

Aus der DE 20 2004 020 320 U1 ist ein Brennstoffkessel mit einem Feuerraum und einer Klappe zur Steuerung einer Primärluftzufuhr und einer Klappe zur Steuerung einer Sekundärluftzufuhr im unteren Bereich des Feuerraumes bekannt, bei dem eine Messeinrichtung zur Erfassung des Kaminzuges vorgesehen ist. Zum Regeln eines Saugzuggebläses ist eine Einrichtung zur Differenzdruckmessung im Primärluftkanal angeordnet, die einer stetig regelbaren Primärluftreguliereinrichtung nachgeschaltet ist. Der Kaminzug ist jedoch nur durch das regelbare Saugzuggebläse einzustellen, so dass dieses Saugzuggebläse ständig motorisch anzutreiben ist.

Aus der DE 37 43 205 ist eine Brenneinrichtung für flüssige Brennstoffe mit einem Brennraum bekannt, dem Verbrennungsluft zuzuführen ist und dessen Abgase an einem Abgasstrom anzuordnende Wärmetauscher zur Erwärmung eines Wärmeträgermediums vorgesehen ist. Der Verbrennungsvorgang ist durch eine Regelvorrichtung zu beeinflussen, indem ein regelbares Hauptgebläse betätigt wird. Eine Zugregelvorrichtung ist hier nicht vorgesehen.

Aus der WO 00/50817 A1 ist eine Feuerungsanlage mit einem Brennraum bekannt, dem in unterschiedlichen Höhenlagen und auch von unten Verbrennungsluft zuzuführen ist. Diese Verbrennungsluft kann auch über eine Bypassleitung direkt in einen Abgasstrom eingebracht werden. Eine Zugregelvorrichtung ist jedoch auch hier nicht vorgesehen.

Aus der FR 2 675 886 A1 ist eine Feuerungsanlage der eingangs genannten Art bekannt, bei der über eine Bypassleitung die von außen zugeführte Verbrennungsluft unter Umgehung des Feuerraumes direkt der Abgasführung zugeführt werden kann. Oberhalb der Feuerstätte ist in der Abgasführung vorgeordnet ein Konvektionskeil vorgesehen, über den Verbrennungsabgase vor Eintritt in die Abgasführung beschleunigt werden können.

Aus der US 4,941,451 A ist eine Feuerungsanlage bekannt, bei der ähnlich wie bei der vorgenannten WO 00/50817 A1 einem Brennraum in unterschiedlichen Positionen Verbrennungsluft zugeführt werden kann. Ebenfalls ist es möglich, dass über eine Bypassleitung Luft an dem Brennraum vorbei wiederum ausströmen kann. Eine Zugregelvorrichtung ist jedoch auch hier nicht vorgesehen.

Die Aufgabe der Erfindung ist es, eine Feuerungsanlage zu schaffen, welche einfach, kostengünstig und ohne Betreibereingriff bessere Feuerungsbedingungen herbeiführen kann und welche dabei eine hohe Betriebssicherheit gewährleistet, insbesondere auch beim Einsatz in Einzelfeuerstätten, die direkt im Wohnraum aufgestellt werden.

Diese Aufgabe wird gelöst durch eine Feuerungsanlage mit den Merkmalen des Patentanspruches 1.

Wesentliche vorteilhafte Ausgestaltungen sind in den Ansprüchen 2 bis 4 angegeben.

Eine Drosselvorrichtung im Abgasweg wird dadurch herbeigeführt, dass die durch die Bypassleitung geleitete Zuluft (abgezweigte Verbrennungsluft) über das Wärmetauschermodul geführt wird, wodurch ein Temperaturaustausch zwischen dem Abgas und der zugeführten abgezweigten Verbrennungsluft erfolgt. Dadurch wird zunächst die Durchströmung des Feuerraumes begrenzt, so dass diese nicht mit einem steigenden Schornsteinzug proportional zunimmt. Darüber hinaus bewirkt die kalte, über die Bypassleitung zugeführte abgezweigte Verbrennungsluft eine Senkung der der Abgastemperatur und damit der Schornsteintemperatur und somit eine Verringerung des Auftriebes im Abgaszug. Damit erfolgt eine Verringerung des Auftriebes in der Folge des Schornsteinunterdruckes bzw. des Schornsteinzuges.

Darüber hinaus ist vorgesehen, dass das Wärmetauschermodul oberhalb des Feuerraums angeordnet ist.

Dadurch kann die Drosselung im Abgasweg realisiert werden. Darüber hinaus ist die Einmündung der abgezweigten Verbrennungsluft, die die Bypassleitung durchströmt, so gestaltet, dass Staub oder Asche nicht in den Bypasskanal fallen kann. Dazu ist ein entsprechendes Staubschutzblech in dem Luftabgaswärmetauschermodul vorgesehen. Insgesamt ist damit eine sehr kompakte Bauweise zu realisieren.

Weitere vorteilhafte Ausgestaltungen ergeben sich aus weiteren Unteransprüchen, der nachfolgenden Beschreibung und der Zeichnung. In der Zeichnung zeigen:
- Fig. 1: eine Schemadarstellung eines Ausführungsbeispiels einer Feuerungsanlage nach der Erfindung mit Darstellung der Verbrennungsluftzufuhr, der Abgasführung und der Bypassleitung;
- Fig. 2: eine Seitenansicht auf ein Ausführungsbeispiel einer Feuerungsanlage nach der Erfindung;
- Fig. 3: eine Seitenansicht eines alternativen Ausführungsbeispiels nach der Erfindung;
- Fig. 4: eine Seitendarstellung einer Feuerungsanlage mit Bypassleitung und dem Wärmetauschermodul in der Abgasführung.

In der Zeichnung ist allgemein mit 1 eine Feuerungsanlage beziffert, die eine Verbrennungsluftzufuhr 2 und eine Abgasführung 3 aufweist. Diese Verbrennungsluftzufuhr 2 umfasst eine Primärluftzuführung 4 und eine Sekundärluftzuführung 5 mit jeweiligen Drosselvorrichtungen.

Zwischen der Verbrennungsluftzufuhr 2 und der Abgasführung 3 ist eine Bypassleitung 8 mit einer Drosseleinrichtung 7 vorgesehen. Über diese Bypassleitung 8 ist die Verbrennungsluft bzw. ein Teil der Verbrennungsluft unter Umgehung des Feuerraumes der Feuerungsanlage 1 direkt in die Abgasführung und damit in einen an die Abgasführung 3 angeschlossenen Schornstein zu führen.

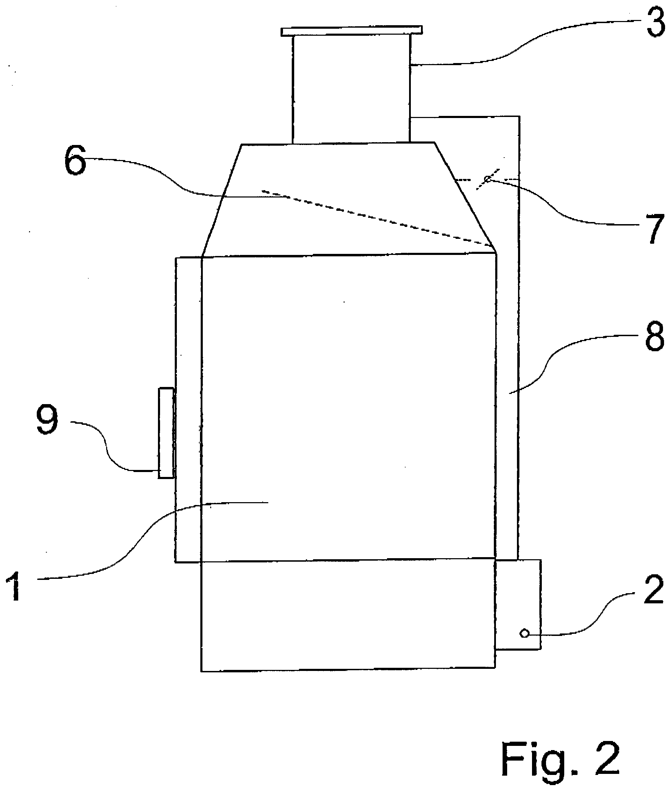

Wie aus Fig. 2 zu ersehen ist, ist die Feuerungsanlage 1 noch mit einer Feuerraumtür bzw. einem Feuerraumtürgriff 9 ausgestattet und hat eine innere Abgasumlenkung 6.

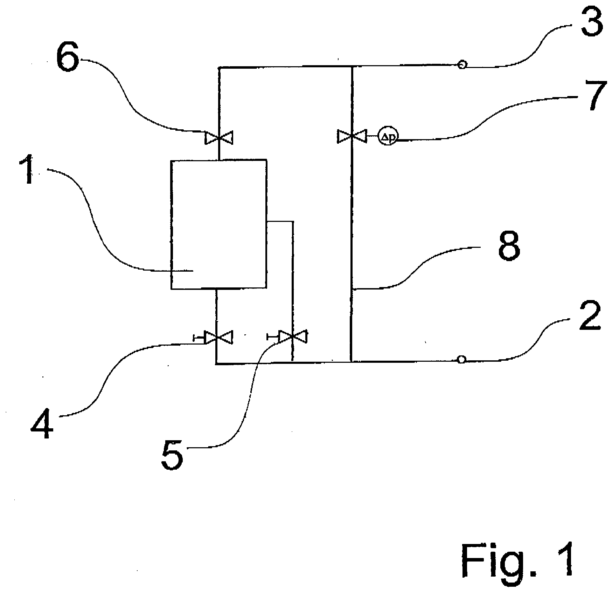

Die in der Fig. 1 dargestellte Drosseleinrichtung 7 ist in Fig. 2 näher veranschaulicht. Es handelt sich um eine druckgesteuerte Drosseleinrichtung, die zusammen mit der Bypassleitung die Zugregelvorrichtung bildet.

Wie aus Fig. 2 ersichtlich ist, ist die Bypassleitung 8 hinter dem Feuerraum der Feuerungsanlage 1 angeordnet und mithin von einem Wohnraum aus nicht einzusehen.

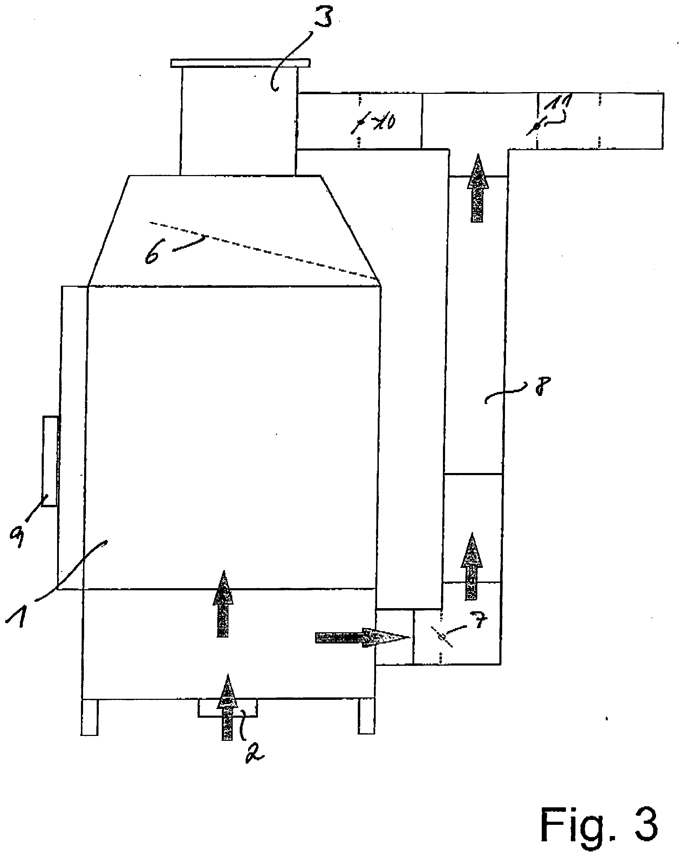

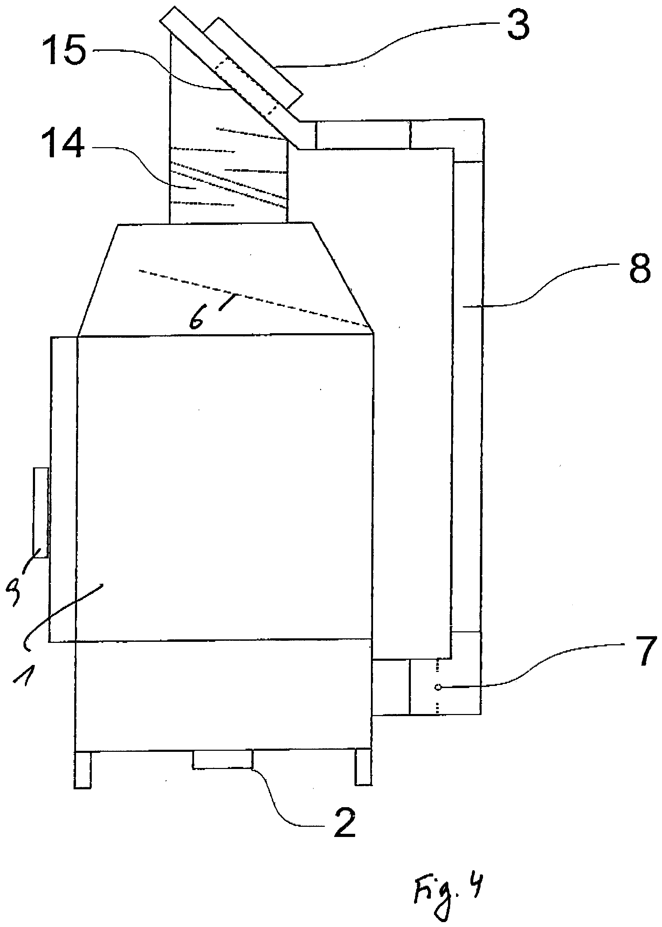

Wie näher aus Fig. 3 hervorgeht, sind in der Bypassleitung 8 Drosselklappen 7, 10 und 11 vorgesehen. Über die Bypassleitung 8 und über die Drosselklappe 10 ist abgezweigte kalte Verbrennungsluft der Abgasführung 3 zuzuführen, wie dies näher aus Fig. 4 hervorgeht. Dazu ist in der Abgasführung 3 ein Wärmetauschermodul 15 vorgesehen, das einerseits von abgezweigter kalter Verbrennungsluft durchströmt wird und andererseits von heißen Abgasen, die vom Feuerraum 1 her abströmen. Diese Abgase werden durch die kalte abgezweigte Verbrennungsluft gekühlt, was zu einer Senkung der Schornsteintemperatur und somit zu einer Verringerung des Auftriebes führt, was sich auch bei außerordentlich kompakter Bauweise auf den Schornsteinzug auswirkt.

## Patentansprüche

1. Feuerungsanlage (1), insbesondere Kamin-, oder Kachelofen, Kamineinsatz oder dgl. Vorrichtung zur Verbrennung fester Brennstoffe wie Scheitholz, Holzpresslingen wie Brickets oder Pellets oder mineralischer Brennstoffe wie Kohle oder Anthrazit mit einem verschließbaren Feuerraum und einem Verbrennungsluftanschluss mit einer Verbrennungsluftzufuhr und mit einer an einen Schornstein anschließbaren Abgasführung, wobei die Verbrennungsluftzufuhr eine eine Schornsteinzugriegelvorrichtung ausbildende Bypassleitung (8) aufweist, die die Verbrennungsluftzufuhr unter Umgehung des Feuerraumes mit der Abgasführung verbindet, wobei in der Abgasführung (3) ein Wärmetauschermodul (14) vorgesehen ist, das an die Bypassleitung (8) und an die Abgasführung (3) anschließbar ist, so dass über das Wärmetauschermodul (14) eine Drosselung in der Abgasführung (3) realisierbar ist, **dadurch gekennzeichnet, dass** in Strömungsrichtung des Abgases in der Abgasführung (3) oberhalb des Wärmetauschermoduls (14) ein Staubschutzblech (15) angeordnet ist.

2. Feuerungsanlage (1) nach Anspruch 1, **dadurch gekennzeichnet, dass** die Bypassleitung (8) eine erste Drosselvorrichtung (7), eine zweite Drosselvorrichtung (9) und/oder eine dritte Drosselvorrichtung (10) aufweist.

3. Feuerungsanlage (1) nach Anspruch 1 oder 2, **dadurch gekennzeichnet, dass** die Drosselvorrichtung (7) und/oder die Drosselvorrichtung (10) und/oder die Drosselvorrichtung (11) in Abhängigkeit des Schornsteinzugdruckes betätigbar sind.

4. Feuerungsanlage (1) nach einem der Ansprüche 1 bis 3, **dadurch gekennzeichnet, dass** die Bypassleitung (8) mehrere Kanäle mit jeweils zumindest einer auf den Schornsteinzugdurck reagierenden Drosselvorrichtung (7) aufweist.

## Claims

1. Heating system (1), in particular a woodburning stove or tiled stove, fireplace insert or similar device for burning solid fuels such as logs, compressed wood such as briquettes or pellets, or mineral fuels such as coal or anthracite, having a closable firebox and a combustion air connection with a combustion air inlet and having an exhaust gas duct which can be connected to a chimney, the combustion air inlet having a bypass line (8) forming a chimney draught control device which connects the combustion air inlet to the exhaust gas duct bypassing the firebox, and a heat exchanger module (14) is provided in the exhaust gas duct (3) which can be connected to the bypass line (8) and to the exhaust gas duct (3) to enable a throttling effect to be obtained in the exhaust gas duct (3) by means of the heat exchanger module (14), **characterised in that** a dust guard plate (15) is disposed in the exhaust gas duct (3) above the heat exchanger module (14) in the flow direction of the exhaust gas.

2. Heating system (1) as claimed in claim 1, **characterised in that** the bypass line (8) has a first throttle device (7), a second throttle device (9) and/or a third throttle device (10).

3. Heating system (1) as claimed in claim 1 or 2, **characterised in that** throttle device (7) and/or throttle device (10) and/or throttle device (11) can be operated depending on the chimney draught pressure.

4. Heating system (1) as claimed in one of claims 1 to 3, **characterised in that** the bypass line (8) has several passages, each having at least one throttle device (7) reacting to the chimney draught pressure.

## Revendications

1. Installation de combustion (1), en particulier un poêle-cheminée ou une poêle en faïence, un insert de cheminée ou un dispositif équivalent destiné à la combustion de combustibles solides tels que des bûches de bois, des pièces de bois pressées telles des briquettes ou des pellets, ou de combustibles minéraux tels que le charbon ou l'anthracite, comprenant un foyer qui peut être fermé et un raccord d'air de combustion avec une arrivée d'air de combustion et avec une évacuation de gaz d'échappement qui peut être raccordée à une cheminée, dans laquelle l'arrivée d'air de combustion présente une conduite de dérivation (8) qui forme un moyen de verrouillage du tirage de cheminée (8) et qui relie l'arrivée d'air de combustion à l'évacuation de gaz d'échappement en contournant le foyer, dans laquelle il est prévu dans l'évacuation de gaz d'échappement (3) un module d'échangeur de chaleur (14) qui peut être raccordé à la conduite de dérivation (8) et à l'évacuation de gaz d'échappement (3) de telle sorte que le module d'échangeur de chaleur (14) permet de réaliser un étranglement dans l'évacuation de gaz d'échappement (3), **caractérisée en ce qu'**une tôle de protection contre la poussière (15) est disposée dans la direction d'écoulement des gaz d'échappement dans l'évacuation de gaz d'échappement (3) au-dessus du module d'échangeur de chaleur (14).

2. Installation de combustion (1) selon la revendication 1, **caractérisée en ce que** la conduite de dérivation (8) présente un premier moyen d'étranglement (7), un deuxième moyen d'étranglement (9) et/ou un troisième moyen d'étranglement (10).

3. Installation de combustion (1) selon la revendication 1 ou 2, **caractérisée en ce que** le moyen d'étranglement (7) et/ou le moyen d'étranglement (10) et/ou le moyen d'étranglement (11) peuvent être actionnés en fonction de la pression de tirage de la cheminée.

4. Installation de combustion (1) selon une des revendications 1 à 3, **caractérisée en ce que** la conduite de dérivation (8) comprend plusieurs canaux avec respectivement au moins un moyen d'étranglement (7) réagissant à la pression de tirage de la cheminée.
